Europäisches Patentamt

European Patent Office

Office européen des brevets

(19)

(11) Publication number : **0 576 293 A1**

(12) # EUROPEAN PATENT APPLICATION

(21) Application number : **93304973.6**

(22) Date of filing : **25.06.93**

(51) Int. Cl.$^5$ : **G21B 1/00**

(30) Priority : **26.06.92 US 905770**

(43) Date of publication of application :
**29.12.93 Bulletin 93/52**

(84) Designated Contracting States :
**BE CH DE DK FR GB IE IT LI NL SE**

(71) Applicant : **QUANTUM NUCLEONICS CORP.**
**7123 Caloosa Court**
**Orlando, Florida 32819 (US)**

(72) Inventor : **Ying, Nelson Lee Len**
**7123 Caloosa Court**
**Orlando, Florida 32819 (US)**
Inventor : **Schults III, Charles W.**
**4211 S.Rio Grande Avenue**
**Orlando 32839 (US)**

(74) Representative : **Pilch, Adam John Michael et al**
**D. YOUNG & CO., 21 New Fetter Lane**
**London EC4A 1DA (GB)**

(54) **Energy production from the control of probabilities through quantum level induced interactions.**

(57)  A cold fusion reaction is initiated on demand in a cell (26) containing heavy water in which electrolysis occurs between a platinum and a palladium electrode. The palladium electrode collects deuterium ions which are then caused to fuse by incident radiation from gamma and alpha radiation sources (28, 30).

FIG. 2

EP 0 576 293 A1

This invention is directed to using quantum level induced interactions to control probabilities of uncontrollable quantum mechanical effects, to the control of quantum mechanical transition probabilities, and, more particularly, to inducing a cold fusion reaction.

Classically we talk about deterministic mechanical events such as "given the position and velocity and forces acting on a particle at t=0, its future position and velocity can be determined for all time at $t_n$." With the advent of quantum mechanics, ideas such as the Heisenberg Uncertainty Principle and the particle wave dualism came into being such that on a microscopic quantum level $\Delta X \cdot \Delta P \gtrsim 1$.

The Heisenberg Uncertainty Principle is inherent in quantum mechanics. The observer, by his observation, disturbs the system, such that accuracy below a certain point of precision cannot be simultaneously achieved for complementary pairs, e.g., x,p and t,E. The observer thus unavoidably becomes part of the observed. Because of this uncertainty, results of quantum mechanical calculations are expressed in terms of amplitudes and probabilities.

In scattering experiments, it is a common experience and belief that, since the time required for an incident particle to pass by a nucleus is much shorter than the time which elapses prior to the decay of the compound nucleus formed by this scattering, the decay of the compound nucleus is independent of the scattering which caused the formation of this compound nucleus, and that the decay therefore cannot be influenced. Only probabilities govern this decay.

It is equally commonly known that for a compound nucleus to decay, a channel must exist for those decays, i.e., that conservation and symmetry rules can be obeyed and that sufficient energy must exist to initiate the reaction or there must exist a channel to take away the excess energy fast enough so as to complete the energy removal process within the reaction time.

However, in the realm of quantum mechanics, virtual events can occur in violation of the conservation laws of physics, provided that the events occur within the realm covered by the uncertainty principle. Thus, boson-boson interaction/production occurs which leads to the possibility of cold fusion.

In 1927 Fritz Paneth and K. Peters observed H (hydrogen) in Pd (palladium) in glass producing a trace of He (helium). By 1940, F.C. Franck and Andrei Sakharov postulated that fusion of DD (deuterium-deuterium) is possible if the electron is replaced by a negative muon particle. By 1956, Luis W. Alvarez observed the above by introducing muons into a $D_2$ gas but concluded that the process is too slow to produce meaningful energy. By 1982, the United States Department of Energy started to support research into muon induced fusions.

On March 23, 1989, B. Stanley Pons and Martin Fleischman held a press conference to announce that they had been able to obtain positive energy gain from cold fusion in electrochemical cells. A platinum (Pt) anode and a palladium (Pd) cathode is used in an electrolyte of heavy water and lithium hydroxide. In addition to excess heat, neutrons greater than the background were also found. Finally they also claimed that a 2.2 MeV peak is found in their gamma ray spectrum.

Steven E. Jones published in Nature on April 27, 1989 indicating that he had also discovered cold fusion. However, the amount of power generated by Jones is much less than that of Pons and Fleischman.

Since March 23, 1989, many laboratories around the world have tried to duplicate the Pons et al. experiment. Texas A & M University, Moscow University, and Kossuth University in Hungary had positive results whereas MIT and others did not.

The United States Department of Energy Research Advisory Board convened a panel with John R. Huizenga and Norman F. Ramsey as co-chairmen to study this phenomenon. Their report showed that (as reported in New York Times: July 13, 1989): a) bursts of excess heat remain unexplained and deserve further study, although b) the panel (after visiting University of Utah, Brigham Young University, Cal Tech, Texas A & M University, Stanford University and Stanford Research Institute) have seen no experimental results that are sufficiently free of ambiguities, but c) the excess heat events cannot be attributed to problems with accuracy or calibration alone and are presently not understood.

Peter L. Hagelstein, K.H. Johnson et al., and K.B. Whaley all came out with theoretical explanations but all found their calculated rates to be below that which is needed to explain the Pons and Fleischman results.

The following is known and is drawn upon to reach some of the conclusions in explaining what has, up to now, seemed unexplainable:

1. Pd absorbs up to 900 times its own volume in $D_2$ and in the process becomes more brittle and expands. $Pd_2D$ is considered to be $D^+$ and Pd in a sea of electrons. $D_2$ can come out of previously filled Pd with increase in temperature and decrease in pressure.

2. DD separation in the $D_2$ molecule is 0.74Å with a fusion rate in the order of $10^{-74}$ per D pair per second.

The rate increases greatly to $10^{-12}$ per D pair per second when muons are substituted for electrons, or when pressure is increased using a diamond anvil.

3. In deuterated matter, when not under non-equilibrium conditions, fusion is not found.

4. In tetrahedral crystals, small interstitial units should be less than 0.225 of large crystal radii if not to disturb tetrahedral shape arrangement. For octahedral packing with YX, interstitial X radii needs to be less than 0.414 of Y radii in order not to disturb the octahedral shape arrangement.

5. Pd cubic closest packing has atomic radius of 1.37Å.

6. Phonon assisted tunnelling provides primary mechanism for mobility below 700°K in case of quantum transport of dynamic D (or H) in metals.

7. Identical particle boson phenomena increase probability of having additional boson going into a state already occupied by another boson of the same family.

8. Heat generation stops when Jones' Pd cathode's surface becomes coated.

9. No definite time has been established as to when fusion heat production starts.

The aim of the present inventors was to show the next step up from classical through modern to hyperscience and to demonstrate it in the first of many applications.

We stated that classically we have deterministic mechanisms and that in modern physics we have transition probabilities. The next step is to learn to influence this probability so as to achieve a macroscopic result. What has been done so far is to structure one's experimental environment such that channels exist for certain reactions to occur, given initial conditions and boundary conditions, within constraints of conservation laws of physics, e.g. photons used to stimulate systems to produce more in-phase photons as in lasers. What has not been done and is being considered here is to use suitable particles to influence the entire larger classes of single/multiple incident particles to influence the creation of one or more of these particles plus other non-incident particles.

Respective aspects of the present invention are set forth in claims 1, 2, 5, 8 and 9.

The present invention is illustrated by application to produce cold fusion. Here we will consider using $\alpha$ and $\gamma$ particles to stimulate the fusion channel so as to strongly increase the probability of fusion. By doing this, we are employing $\alpha$ and $\gamma$ particles to ultimately produce fusion and energy. One of the channels could be D + D - $\rightarrow$ $_2$He$^4$ + 23.8 MeV.

A complete sub-class can be found in employing any boson to stimulate production of the same kind of incident bosons, or complementary bosons (i.e. bosons producing more bosons in order to achieve a related complementary result).

A second sub-class can be found from a chain of events in which bosons produce more bosons, whose related products can stimulate the final desired end products. This chain can be extended to any desired length.

We can consider cold fusion in the context of there being a minute probability for a deuteron to fuse with another deuteron under room temperature with electrons in the normal atomic orbits, or with muons replacing the electrons, or with the deuterons pushed together under some other mechanism such as a diamond anvil or the current cold fusion experiments by Pons and Fleischman and by Jones. However, instead of thinking in terms of a probability that a deuteron will be within the range of nuclear interaction of another deuteron, let us say that for a small percentage of time, a deuteron is within the nuclear range of another deuteron. If within this small period of time, a decay of this 'virtual compound nucleus' can be stimulated, then the virtual state becomes an actual state as evidenced by actual results, and thus the transition probability would have been enhanced by stimulation leading to the decay of the until then 'virtual' compound state. By using $\alpha$ and $\gamma$, we produce $\alpha$, $\gamma$ and $\gamma'$ (gamma emissions of a different energy), the productions of which 'stimulate' fusion from a previously 'virtual' state with low probability for fusion.

Inasmuch as Pd expands when D$_2$ is absorbed, it indicates an increase of internal pressure in Pd. This pressure may be kept up with electrolysis providing additional D$_2$. When electrolysis is stopped, an increase in temperature or a drop in pressure will result in D$_2$ leaking out of the Pd.

Prior to stopping of the electrolysis or other form of non-equilibrium condition, D$_2$ is squeezed as seen from the geometry of cubic packing in tetrahedral or octahedral structures. Squeezing can lead towards the 'diamond anvil' conditions without physical compression.

Phonon-assisted tunnelling provides a primary mechanism for quantum transport mobility for D in metal below 700°K. Packing of bosons into previously occupied states/locations is, however, a purely boson identical particle phenomenon.

With the advent of packing, the probability of fusion rate increases until there is either a spontaneous fusion, or as Hagelstein suggested, an exterior high energy particle collides with a deuteron and starts a chain reaction of fusions. Inasmuch as both the spontaneous fusion and the awaiting of an exterior occurrence is dependent on probability, this particular single occurrence cannot be predicted as to the time of occurrence. It is believed that this is why Pons et al. have had difficulty initiating the start of their reaction.

Once started, we propose many branches, of which D + D - $\rightarrow$ $_2$He$^4$ + gamma (23.8 MeV), though rare, occurs and is propagated because gamma can stimulate more gamma, leading to more fusion, which produces more gamma, and so forth. This stimulation is a boson-boson quantum mechanical effect, which enables increasing fusion probabilities, by enlarging this channel of decay, as described above.

The gamma can either lead to more gamma to continue the chain reaction, or can go into the Pd lattice via mechanisms such as Compton scattering and which is exhibited as heat. This is what we call 'coherent' fusion.

In order to maintain coherence and continue the reaction, any gamma not used to produce lattice heat must be saved and reused. Of course, electrolysis must be continued so as to maintain non-equilibrium conditions and to supply more $D_2$. The surface must be kept in condition to permit the further absorption of $D_2$.

In order to find a practical use for this process, the present invention provides a way to initialize this chain reaction on demand. In an illustrative form the invention provides a means of continuing fusion and maintaining heat production in a cold fusion process within a "Ying Cell", and provides a means for the fusion chain reaction to be initiated on demand. A fusion cell contains heavy water in which an electrolysis reaction is initiated by applying current through a pair of electrodes positioned in the cell. One of the electrodes is formed of platinum and the other of palladium. The electrolysis results in deuterium ions being absorbed into the palladium electrode. Gamma and alpha particle radiation sources are positioned adjacent the cell so that gamma and alpha particles are directed onto the palladium electrode. The particles initiate a cold fusion reaction in which deuterium ions fuse within the palladium electrode to form helium ions. Reversing the polarity of the voltage applied to the electrodes stops the reaction and causes the helium ions to be purged from the electrode. The fusion reaction can be restarted on demand by again reversing the voltage polarity once purging is generally complete.

The invention will now be described by way of example with reference to the accompanying drawings, throughout which like parts are referred to by like references, and in which:

Figure 1 is a simplified representation of a 'Fleischman Cell';

Figure 2 illustrates a cold fusion system in accordance with an embodiment of the present invention;

Figures 3 to 5 are exemplary forms of fusion cells used in the system of Figure 2;

Figures 6 to 8 are heat curves illustrating the thermal output of the cells of Figures 3 to 5, respectively; and

Figure 9 is a heat curve of the thermal output of the cell of Figure 5 after electrode rejuvenation.

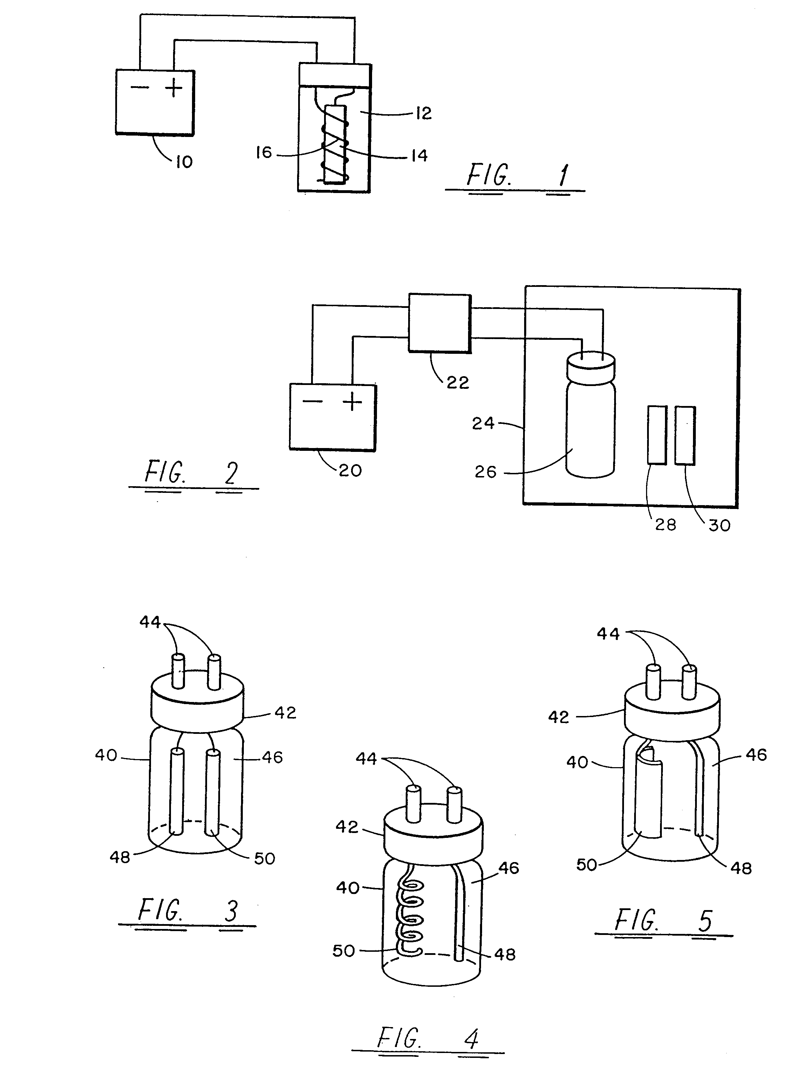

Figure 1 is a simplified illustration of a prior art system proposed by Pons and Fleischman in which current from a battery 10 is sent through a deuterium containing electrolyte 12 and oxygen and deuterium are separated with deuterium ions going to a cathode 14 and oxygen ions going to an anode 16. The deuterium ions are absorbed by the palladium cathode 14. After a while (days, weeks, or longer) heat greater than that introduced into the system is detected. After another indeterminate period, the burst of heat stops. Previous scientists have not been able to obtain this incremental heat increase on command, nor prolong heat generation after it has started.

A preferred embodiment of a cold fusion cell using the teaching of the present invention is shown in Figure 2. A fifteen volt battery 20 sends a current of about one microamp through a purge device 22. The purge device 22 (a polarity reversing switch) can reverse the polarity of the electric current on demand. It may be manually or automatically operated. The current passes from the purge device 22 to the interior of a Faraday shield 24 and into a fusion cell 26 to initiate an electrolytic process for developing deuterium ions. The cell 26, shown in Figures 3, 4 and 5, holds about 20g of $D_2O$. A source of alpha radiation 28 and a source of gamma radiation 30 within the shield 24 operate in tandem, directing their radiation to the cell 26. We continue the electrolysis to provide both the non-equilibrium state and the deuterium ions which continue to go to the palladium cathode similarly to the process previously described in conjunction with the prior art system of Figure 1.

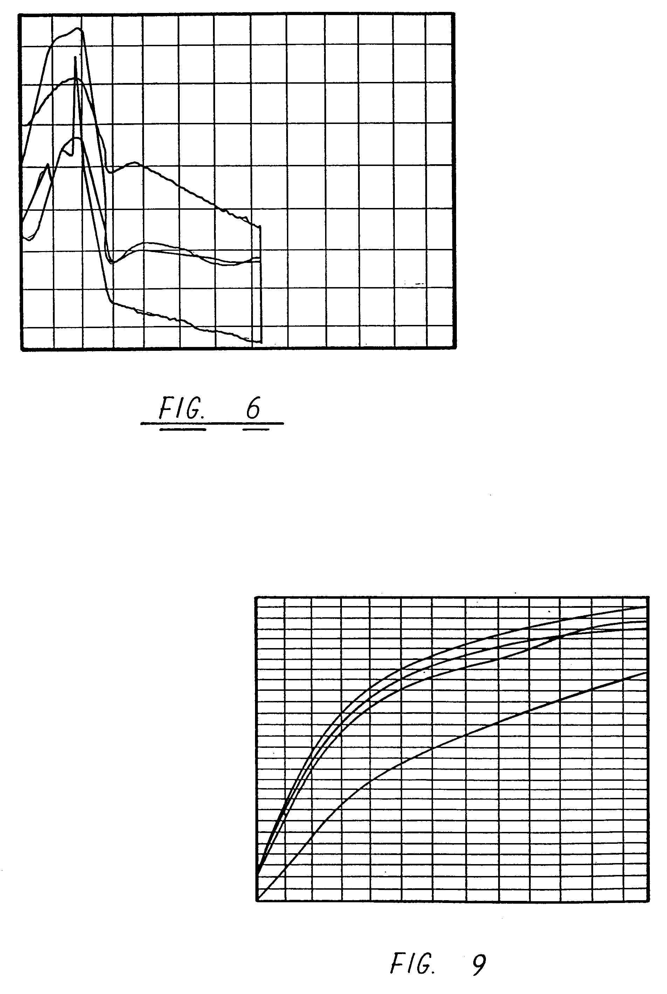

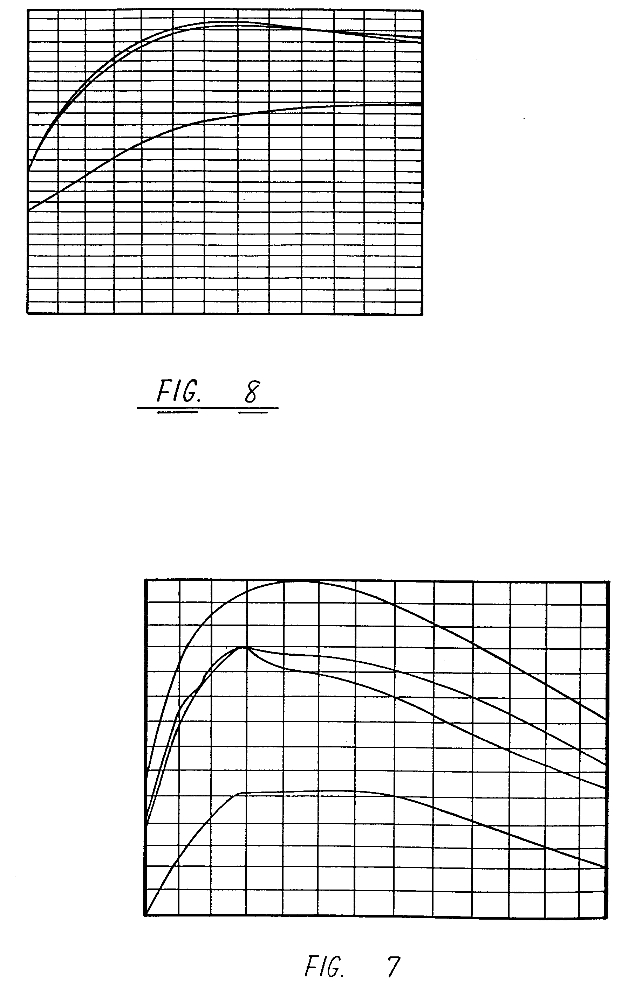

The inventors have found that the fusion process requires an initiator. Their investigation has discovered that gamma and/or alpha radiation in tandem from $Co^{60}$ and $po^{210}$ sources 30, 28 respectively, work quite well. The inventors have found that one micro-Curie of each gamma and alpha emitter is sufficient to initiate a fusion reaction. Furthermore, inasmuch as the cathode condition is important, the purge device 22 is provided to purge and rejuvenate the palladium cathode. A Faraday cage is used to help prevent some leakage of radiation. Thermocouples (not shown) were used to measure temperature. The thermocouples were placed on the cell 26 within the cage 24. Successful experiments were carried out using cells of three geometries (see Figures 3, 4 and 5). In each case, the cell 26 includes a cell cover 42, two lugs for electrical connections 44, heavy water ($D_2O$) inside the cell 26, a platinum anode 48, and a palladium cathode 50 in different shapes. In the three cells, the inventors produced respectively 0.37, 0.44 and 0.3 watts. The input power in each case from electrolysis was 15 microwatts or less. This implies a power increase of over five orders of magnitude (Figures 6, 7 and 8). In each of Figures 6, 7, 8 and 9 the Y axis shows temperature increase of 0.5 °c per box and the X axis shows time of 275 seconds per box. Four curves show thermal results from four thermocouples placed at different parts of the cell 26.

Inasmuch as we discovered that heat generation stopped after a certain amount of time, approximately 1925 sec, 825 sec and 530 sec for each cell, respectively, and inasmuch as we discovered the voltage of each exhausted and disconnected cell to be between 0.9 and 1.2 volts, we decided to reverse voltage on each cell for 10 seconds. After disconnection from this "purging", we found a disconnected, rejuvenated cell to measure 0.34 volts.

We then immediately reused this rejuvenated cell and one example of this result is shown in Figure 9.

The cell produced 0.5 watts which represents an increase of 5½ orders of magnitude.

In summary, the present technique incorporates the following differences from, and advantages over, previously known spontaneous cold fusion methods and apparatus:

A. A means of initiating the fusion process chain reaction on demand so as not to have to await spontaneous fusion or exterior random high energy particles.

B. A means for rejuvenating a Pd cathode for further $D_2$ absorption and fusion to permit continual cell operation.

## Claims

1. A method of stimulating a cold fusion reaction, the method comprising the steps of:

   initiating an electrolysis reaction within a chamber (26) containing deuterium oxide;

   absorbing deuterium ions into a palladium electrode (50) within the chamber (26); and

   directing a stream of alpha and gamma particles onto the palladium electrode (50) for effecting fusion of deuterium ions into helium ions.

2. A method of stimulating a cold fusion reaction in a cell (26) containing heavy water and having a pair of spaced electrodes (48, 50) suspended in the cell (26), one (50) of the electrodes being formed of an electrically conductive material having a molecular lattice structure permeable to hydrogen and hydrogen isotopes, the method comprising the steps of:

   connecting a source (20) of a direct current electric potential between the electrodes (48, 50) for initiating electrolysis of the heavy water for extracting hydrogen ions;

   collecting at least some of the hydrogen ions in the lattice structure of the hydrogen permeable electrode (50) wherein at least some of the hydrogen ions fuse to form unstable helium ions; and

   impinging alpha particles on the hydrogen permeable electrode (50) during the collecting step, the alpha particles stimulating emission of the helium ions from the lattice structure.

3. A method according to claim 2, including the further step of impinging gamma particles on the hydrogen permeable electrode (50) concurrently with the step of impinging alpha particles.

4. A method according to claim 2 or claim 3, including the step of periodically reversing (22) the electric potential between the electrodes (48, 50) for sweeping helium ions from the lattice structure of the hydrogen permeable electrode (50).

5. Apparatus for effecting a cold fusion reaction, the apparatus comprising:

   a reaction cell (26) containing heavy water;

   a pair of electrodes (48, 50) extending into said cell (26) and at least partially immersed in said water, one (50) of said electrodes being formed of an electrically conductive material having a molecular lattice structure permeable to hydrogen and hydrogen isotopes;

   a source (20) of direct current electrical potential connected between said electrodes (48, 50) for initiating electrolysis of said water and attracting hydrogen ions to said hydrogen permeable electrode (50); and

   a radiation source (28) for generating alpha particles, said radiation source (28) being positioned proximate said cell (26) such that alpha particles emitted therefrom impinge on at least said partially immersed hydrogen permeable electrode (50) for interacting with said hydrogen ions and producing stable helium.

6. Apparatus according to claim 5, including a gamma particle source (30) for generating gamma particles, said gamma particle source (30) being positioned such that said gamma particles impinge on said hydrogen permeable electrode (50) substantially concurrently with said alpha particles.

7. Apparatus according to claim 5 or claim 6, including means (22) between said electrodes (48, 50) and said electric potential source (20) for selectively reversing the voltage polarity between said electrodes (48, 50).

8. A method of using incident boson particles to change a final probabilistic outcome of quantum processes, the method comprising the steps of:

   directing a boson particle onto a potential reaction site for stimulating emission of similar boson particles and other particles; and

   collecting the stimulated particles for application to a further reaction process.

9. A method of initiating a cold fusion reaction, the method comprising the steps of:

   continually directing boson particles from a source (28, 30) thereof onto a potential reaction site (26); and

   stimulating emission of similar boson particles and other particles in response to the continually directing step.

FIG. 1

FIG. 2

FIG. 3

FIG. 4

FIG. 5

FIG. 6

FIG. 9

FIG. 8

FIG. 7

European Patent
Office

**EUROPEAN SEARCH REPORT**

Application Number

EP 93 30 4973

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-9 015 416 (B.C. EDWARDS)<br>* page 1, line 24 - page 2, line 24 *<br>* page 4, line 6 - line 24 *<br>* claims 2,5,10; figure 1 *<br>--- | 1-7 | G21B1/00 |
| Y | WO-A-9 013 129 (M.I.T.)<br>* page 3, paragraph 2 * | 1-7 | |
| A | * page 17, paragraph 2 *<br>--- | 9 | |
| P,Y | WO-A-9 301 601 (UNIV. OF UTAH)<br>* page 9, line 7 - line 19 *<br>--- | 4,7 | |
| A | EP-A-0 394 980 (MATSUSHITA)<br>* claims 1-2 *<br>--- | 1-2,5 | |
| A | FUSION TECHNOLOGY<br>vol. 17, no. 1, January 1990, LAGRANGE PARK, ILLINOIS US<br>pages 206 - 208 , XP84739<br>C. STEINERT 'Laser-induced "semicold" fusion'<br>* page 206, right column, last paragraph *<br><br>----- | 1-2 | TECHNICAL FIELDS SEARCHED (Int. Cl.5 )<br><br>G21B |

The present search report has been drawn up for all claims

| Place of search | Date of completion of the search | Examiner |
|---|---|---|
| THE HAGUE | 30 AUGUST 1993 | CAPOSTAGNO E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)